# EUROPÄISCHE PATENTSCHRIFT

(11) **EP 3 898 081 B1**
(45) Veröffentlichungstag und Bekanntmachung des Hinweises auf die Patenterteilung: **13.09.2023**
(21) Anmeldenummer: 21706258.7
(22) Anmeldetag: 17.02.2021
(51) Int. Cl.: B24C 1/00, B24C 7/00, C01B 32/55, B30B 11/28, B30B 11/22

(54) **TROCKENEIS-PELLET-STRAHLVERFAHREN UND VORRICHTUNG ZU SEINER DURCHFÜHRUNG**
DRY-ICE PELLET BLASTING METHOD AND APPARATUS FOR CARRYING OUT SAME
PROCÉDÉ DE SABLAGE À L'AIDE DE GRANULÉS DE GLACE SÈCHE ET APPAREIL POUR SA MISE EN OEUVRE

(30) Priorität: 06.03.2020 DE 102020106111
(43) Veröffentlichungstag der Anmeldung: 27.10.2021
(73) Patentinhaber: ACP Systems AG, 78658 Zimmern ob Rottweil (DE)
(72) Erfinder: Jäger, Felix, 78333 Stokach (DE); Haas, Andreas, 78112 St. Georgen (DE); Illg, Jonas, 71254 Ditzingen (DE)
(74) Vertreter: DREISS Patentanwälte PartG mbB
(86) Internationale Anmeldenummer: PCT/EP2021/053903
(87) Internationale Veröffentlichungsnummer: WO 2021/175595

(56) Entgegenhaltungen:
- EP-B1- 3 074 180
- DE-U1-202018 106 364

## Beschreibung

Die Erfindung betrifft ein Trockeneis-Pellet-Strahlverfahren und eine Reinigungsvorrichtung für die Impuls beaufschlagende Abreinigung von Gegenständen mittels eines Trockeneis-Pellets mitführenden Gasstroms unter Ausführung eines solchen Strahlverfahrens.

Die für ein Trockeneis-Pellet-Strahlverfahren benötigten Trockeneis-Pellets werden seither überwiegend in einer separaten Einrichtung hergestellt, zwischengelagert und dann einer Strahlvorrichtung, insbesondere einer Reinigungsvorrichtung, zugeführt.

Die Herstellung von Trockeneis-Pellets erfolgt überwiegend im sogenannten Pressenverfahren, indem zuvor aus flüssigem CO₂ durch Expansion und Abkühlung des flüssigen CO₂ in einer Expansionseinrichtung hergestellter CO₂-Schnee einer mechanischen, insbesondere hydraulischen Presseneinrichtung zugeführt, der CO₂-Schnee verdichtet und durch eine Lochmatrize hindurchgepresst wird. Dabei wird im Verdichtungsprozess der CO₂-Schnee gegen die Matrize gepresst, verdichtet und durch deren Öffnungen als Trockeneis in Form von zylindrischen Stangen ausgegeben. Diese Stangen werden durch geeignete Vorrichtungen zu Trockeneis-Pellets gebrochen. Die so produzierten Trockeneis-Pellets werden in spezielle isolierte Behälter gefüllt und so für die Weiterverwendung in einem Trockeneis-Pellet-Strahlverfahren zur Verfügung gestellt. Die überwiegend hydraulischen Presseneinrichtungen bewirken jedoch in nachteiliger Weise eine Kontamination der herzustellenden Trockeneis-Pellets durch Schmiermittel oder Spanabrieb, so dass diese Trockeneis-Pellets für eine Vielzahl von Reinigungsaufgaben, insbesondere in der optischen oder medizinischen Branche unbrauchbar sind. Eine weitere Kontamination der Trockeneis-Pellets entsteht während deren Zwischenlagerung. Zum einen nehmen Trockeneis-Pellets aufgrund ihrer großen Oberfläche Feuchtigkeit aus der Umgebung auf, so dass sie hierdurch zusammenfrieren und erst wieder voneinander getrennt werden müssen. Jedenfalls ist es schwer möglich, die Trockeneis-Pellets bei der Abgabe in eine Strahlvorrichtung vor Umgebungseinflüssen und sei es nur die Atmosphäre zu schützen. Eine andere Möglichkeit besteht darin, Trockeneis in Form von größeren Blöcken herzustellen und bereitzuhalten und von diesen Blöcken Pellets abzuschaben oder abzuraspeln und danach einem Druckgasstrom als Strahlgut zuzugeben. Auch hier stellen sich naturgemäß Probleme und das Strahlgut unterliegt starken Schwankungen in der Partikelgröße und ist somit inhomogen.

DE 10 2011 104 284 A1 offenbart ein nicht gattungsgemäßes Verfahren und eine nicht gattungsgemäße Vorrichtung zum Erzeugen von Trockeneisschnee oder -Pellets, wobei hierfür zuvor gebildeter CO2 Schnee durch zwei miteinander kämmende Schneckenräder in axialer Richtung der Schneckenräder verdichtet und in Richtung auf eine Matrize transportiert und schließlich in Öffnungen der Matrize zu Trockeneis-Strömen oder -Strängen geformt und ausgegeben wird. Im Zuge der Bildung von CO2 Schnee zusätzlich gebildetes CO2-Gas kann durch einen rohrförmigen die Schneckenräder umgebenden Filter nach radial außen gelangen und dort von einem Druckluftstrom mitgeführt werden. Gemäß einer nicht dargestellten Ausführungsform kann auf den rohrförmigen die Schneckenräder umgebenden Filter verzichtet werden, indem die Schneckenwellen selbst als Hohlwellen aus einem Filtermaterial ausgebildet sind, so dass überschüssiges CO2-Gas nach radial innen durch die Hohlwellen hindurch gelangen kann. Die hohlen Schneckenwellen dienen also als Entgasungsraum. Sie weisen am hinteren Ende eine Druckluftzufuhr und am vorderen Ende einen Gasauslass auf. Die eingeleitete und durch den Gasauslass austretende Druckluft kann abstromseitig der Schneckenräder den Trockeneis-Strängen zugeführt werden und als Trägergas das aus der Matrize axial austretende Trockeneis mitreißen. Im Übrigen entsprechen Funktion und Betriebsweise der in den Figuren 3-5 dieser Druckschrift dargestellten Ausführungsformen.

Mit EP 3 074 180 B1 ist bereits eine Vorrichtung zur Herstellung von Trockeneis-Pellets aus CO₂-Schnee für ein Reinigungsgerät und ein Reinigungsgerät mit einer solchen Vorrichtung mit den Oberbegriffsmerkmalen des Anspruchs 6 und hierdurch auch ein Trockeneis-Pellet-Strahlverfahren mit den Oberbegriffsmerkmalen des Anspruchs 1 vorgeschlagen worden. Gemäß dieser Druckschrift werden Trockeneis-Pellets durch einen Zahnradverdichter hergestellt, indem CO₂-Schnee in den Spalt zwischen miteinander kämmenden Zahnrädern eingegeben wird. Von einem jeweiligen Nutgrund zwischen den Zahnflanken erstrecken sich jeweils Öffnungen in einen radial inneren Innenraum der Zahnräder. Durch Abrollen der Zahnräder gegeneinander wird CO₂-Schnee zu Trockeneis verdichtet und durch diese Öffnungen hindurch nach radial innen in das Innere der Zahnräder verdrängt und dort abgeschert, wodurch Trockeneis-Pellets gebildet werden. Diese so hergestellten Trockeneis-Pellets werden in einen Zwischenspeicher gegeben, wo es dann naturgemäß zu den eingangs geschilderten Problemen kommt, oder sie werden einer Übergabeeinrichtung zugeführt zum weiteren Übergeben an eine Trockeneis-Pellets-Beschleunigungseinrichtung, um einem Druckgasstrom zugeführt zu werden.

DE 10 2018 106 364 U1 zeigt ebenfalls ein Verfahren zum Herstellen von Trockeneis-Pellets, wobei die Trockeneis-Pellets aus CO2-Schnee in einer Verdichtungseinrichtung durch miteinander kämmende Verdichterräder gebildet werden, die als Hohlwellen mit einer axialen Durchgangsöffnung und radialen Öffnungen ausgebildet sind entsprechend dem Oberbegriff des anliegenden Anspruchs 1. Die so gebildeten Trockeneis-Pellets werden aus den Hohlwellen einer weiteren Anlage zugeführt, in welcher damit weitere Arbeitsvorgänge durchgeführt werden. Beispielsweise kann die Anlage aus den Trockeneis-Pellets Reinigungsstrahlen zum Reinigen von Bauteilen oder zum Entgraten von Bauteilen generieren. Weitere Möglichkeiten der Weiterverarbeitung seien die Herstellung von Trockeneisscheiben oder Blöcken.

US 2019/0076989 A1 zeigt eine ähnliche Reinigungsvorrichtung mit den Oberbegriffsmerkmalen des Anspruchs 6 zur Herstellung von Trockeneis-Pellets mit einer nachgeordneten Strahlvorrichtung. Auch hier wird CO2 Schnee einem Spalt zwischen miteinander kämmenden Verdichterrädern zugeführt und durch radiale Verdichtungsvertiefungen nach radial innen hindurchgedrückt und dabei zu CO2 Trockeneis Pellets geformt. Auch wenn hierbei nicht verfestigtes CO2 Gas möglicherweise in gewissem Umfang mitgeführt werden sollte, so handelt es sich hierbei nicht um denjenigen Druckgasstrom, mittels dessen ein abzureinigender Gegenstand beaufschlagt wird. Vielmehr werden CO2 Pellets aus der axialen Durchgangsöffnung der Verdichterräder einer komplex ausgebildeten Übergabeeinrichtung zugeführt, wo sie in Oberflächenkavitäten einer Übergabewalze aufgenommen und dann erst einem Druckgasstrom zugeführt werden, in welchem die CO2 Pellets beschleunigt und dann auf einen abzureinigenden Gegenstand aufgestrahlt werden. Die Bildung der CO2 Pellets erfolgt also losgelöst und separiert von der Bereitstellung des für die Abreinigung benutzten Druckgastroms. Die Übergabeeinrichtung bildet hierbei auch einen Zwischenspeicher, in dem es wiederum zu den eingangs genannten Problemen kommen kann.

Der vorliegenden Erfindung liegt die Aufgabe zugrunde, ein Strahlverfahren der im Oberbegriff des Anspruchs 1 genannten Art im Hinblick auf die eingangs angesprochenen Problemaspekte noch weitergehend zu verbessern.

Diese Aufgabe wird bei einem Verfahren der genannten Art erfindungsgemäß dadurch gelöst, dass der Gasstrom durch die Durchgangsöffnung zumindest eines oder vorzugsweise zweier miteinander kämmender Verdichterräder hindurchgeführt wird, und zwar in axialer Richtung in die axiale Durchgangsöffnung eingeleitet und in axialer Richtung durch die axiale Durchgangsöffnung hindurchgeführt wird, so dass die nach radial innen in die betreffende Durchgangsöffnung hineingedrückten Trockeneis-Pellets unmittelbar dem Gasstrom zugeführt und von diesem mitgeführt werden, so dass die Trockeneis-Pellets nur während der Ausführung des Strahlverfahrens hergestellt werden.

Auf diese Weise ist die Herstellung der zur Ausführung des Trockeneis-Pellet-Strahlverfahrens benötigten Trockeneis-Pellets noch enger an deren tatsächliche Verwendung in dem Strahlverfahren gebunden bzw. gekoppelt. Umwelteinflüsse und damit Qualitätsminderungen der Trockeneis-Pellets werden noch weitergehend vermieden.

In Weiterbildung der Erfindung wird vorgeschlagen, dass die Trockeneis-Pellets durch zwei miteinander kämmende Verdichterräder mit jeweils einer axialen Durchgangsöffnung aus CO₂-Schnee gebildet werden, und dass jedes Verdichterrad Vorsprünge und Verdichtungsvertiefungen aufweist, die miteinander in Eingriff und außer Eingriff bringbar sind, so dass Trockeneispellets in die Durchgangsöffnung jedes der zwei miteinander kämmenden Verdichterräder hineingedrückt werden, und dass durch beide Durchgangsöffnungen ein Gasstrom geführt wird. Hierdurch kann eine größere Menge von Trockeneis-Pellets pro Zeit hergestellt werden, oder die Antriebsgeschwindigkeit der Verdichterräder kann reduziert werden, was sich ebenfalls als vorteilhaft erweisen kann. Auf diese Weise erhält man zwei Trockeneis-Pellets enthaltende und mitführende unter Druck stehende Gasströme, die auch getrennt voneinander weiter prozessiert werden könnten. Nach einer Ausführungsform des erfindungsgemäßen Verfahrens wird indessen vorgeschlagen, dass beide Gasströme stromabwärts zusammengeführt werden, um einen einzigen Gasstrom zu bilden, um den zu reinigenden Gegenstand zu beaufschlagen.

Es erweist sich für die Ausführung des erfindungsgemäßen Strahlverfahrens als vorteilhaft, wenn der Gasstrom auf einem Druck von 3 - 20 bar, insbesondere 3-15 bar, insbesondere 3-12 bar, insbesondere 3-10 bar, gehalten wird.

Weiter erweist es sich für die Ausführung des erfindungsgemäßen Strahlverfahrens als vorteilhaft, wenn der Gasstrom mit einer Geschwindigkeit von 4-60 m/s betrieben wird. Er kann zur weiteren Beschleunigung einer konvergenten oder konvergent-divergenten Düse zugeführt werden.

Nach einer besonders bevorzugten Ausführungsform des erfindungsgemäßen Strahlverfahrens wird vorgeschlagen, dass die Verdichterräder während der Ausführung des Strahlverfahrens kontinuierlich und nicht getaktet angetrieben werden. Hierdurch ergibt sich ein gleichförmiger Strom einer gleichbleibenden Partikeldichte. Dessen ungeachtet kann das Verfahren ruckfrei ausgeführt werden, und die Bestandteile der Verdichtungseinrichtung werden weniger mechanisch beansprucht.

Als besonders vorteilhaft erweist sich weiter, dass für die CO₂-Schnee- und CO₂-Trockeneis-Pellet-Herstellung keine pneumatischen oder hydraulischen Komponenten verwendet werden. Dies erhöht die Qualität der hergestellten Trockeneis-Pellets.

Nach einer weiteren bevorzugten Ausführungsform wird vorgeschlagen, dass beide Verdichterräder jeweils individuell und synchron zueinander angetrieben werden und dass die Verdichterräder berührungsfrei miteinander kämmen. Dies ist durch individuellen Antrieb jedes der Verdichterräder realisierbar. Wenn bei einem Zahnradverdichter indessen nur eines der Zahnräder angetrieben wird, so lässt sich dies naturgemäß nicht realisieren, und es entsteht Abrieb durch die gegeneinander abwälzenden Flanken der Zahnräder, was wiederum die Qualität der Trockeneis-Pellets beeinträchtigt.

Die Trockeneis-Pellets werden gebildet, in dem stab- oder säulenförmiges Trockeneis in die jeweilige Durchgangsöffnung der Verdichterräder nach radial innen ausgedrückt und dort gebrochen wird. Dieses Brechen könnte mehr oder weniger kontrolliert erfolgen. Im Hinblick auf die Erzielung einer gleichförmigen Geometrie bei den herzustellenden Trockeneis-Pellets erweist es sich indessen als vorteilhaft, wenn nach radial innen in die betreffende Durchgangsöffnung hineingedrückte Trockeneis durch eine dort vorgesehene Abschereinrichtung zu Trockeneis-Pellets gebrochen wird.

Wie schon erwähnt ist Gegenstand der Erfindung weiter eine Reinigungsvorrichtung für die Impuls beaufschlagende Abreinigung von Gegenständen mit den Merkmalen des Anspruchs 6. Es wird also erfindungsgemäß vorgeschlagen, dass die axiale Durchgangsöffnung eines oder beider oder mehrerer Verdichterräder Teil der Druckgas-Leitungsmittel zur Führung des Gasstroms ist. Der unter Druck und Strömungsgeschwindigkeit stehende Gasstrom wird also durch das Innere des oder der Verdichterräder hindurchgeführt, so dass nach radial innen durch die Verdichterräder hindurch verdrängtes Trockeneis zu Pellets gebrochen und unmittelbar dem Gasstrom als Strahlgut zugeführt wird.

Wie schon im Zusammenhang mit dem erfindungsgemäßen Strahlverfahren ausgeführt, erweist es sich als vorteilhaft, dass in beiden miteinander kämmenden Verdichterrädern jeweils eine axiale Durchgangsöffnung ausgebildet ist, welche Teil der Druckgas-Leitungsmittel ist, und dass jedes Verdichterrad Vorsprünge und Verdichtungsvertiefungen aufweist, die miteinander in Eingriff und außer Eingriff bringbar sind, so dass Trockeneispellets in die Durchgangsöffnung jedes der zwei miteinander kämmenden Verdichterräder hineingedrückt werden.

Demgemäß erweist es sich auch als vorteilhaft, wenn beide axiale Durchgangsöffnungen und damit beide Gasströme stromabwärts zusammengeführt sind, um einen einzigen Gasstrom zu bilden, um den zu reinigenden Gegenstand zu beaufschlagen.

Es wird weiter vorgeschlagen, dass eine derart ausgebildete Antriebseinrichtung für die Verdichterräder vorgesehen ist, dass beide Verdichterräder während der Ausführung des Strahlverfahrens jeweils individuell und synchron zueinander angetrieben werden.

Weiter wird vorgeschlagen, dass die Verdichterräder kontinuierlich und nicht getaktet antreibbar sind.

Weiter wird vorgeschlagen, dass die Verdichterräder berührungsfrei miteinander kämmen.

Weiter erweist es sich als vorteilhaft, wenn in einer jeweiligen axialen Durchgangsöffnung eines Verdichterrads eine Abschereinrichtung vorgesehen ist, mittels derer nach radial innen in die betreffende Durchgangsöffnung hineingedrücktes Trockeneis zu Trockeneis-Pellets abscherbar ist.

Nach einer besonders vorteilhaften Ausführungsform der erfindungsgemäßen Vorrichtung erweist es sich als vorteilhaft, dass die Verdichterräder nicht in der Form von Zahnrädern ausgebildet sind, sondern dass die nach außen vorstehenden Vorsprünge der Verdichterräder stößel-, stiftförmig oder domförmig ausgebildet sind, also in ihrer Umfangsrichtung und Umgebung freistehend sind. Auf diese Weise kann jeder Vorsprung als individueller Verdichtungsstößel oder -stempel wirken und mit einer in geeigneter Weise und vorzugsweise im Wesentlichen komplementär ausgebildeten Verdichtungsvertiefung bei dem anderen Verdichterrad zusammenwirken.

In dieser Hinsicht erweist es sich auch als vorteilhaft, wenn nebeneinander angeordnete Verdichtungsvertiefungen voneinander abgegrenzt sind, so dass jede Verdichtungsvertiefung mit einem ihr zugeordneten Vorsprung zur Verdichtung des CO₂-Schnees zusammenwirken kann. Durch die Abgrenzung der Verdichtungsvertiefungen voneinander durch Wandungsbereiche des Verdichterrads wird die Verdichtung des CO₂-Schnees in einer Verdichtungsvertiefung nicht von der momentan erfolgenden Verdichtung des CO₂-Schnees in einer daneben angeordneten Verdichtungsausnehmung beeinflusst. Mithin ist jedem Verdichtungsvorsprung genau eine Verdichtungsvertiefung zugeordnet, in welche der zugeordnete Verdichtungsvorsprung beim Abrollen der Verdichterräder gegeneinander zunehmend in Eingriff und wieder zunehmend außer Eingriff gebracht wird, wodurch die Verdichtung des CO₂-Schnees zu Trockeneis erfolgt und das Trockeneis dann durch die Verdichtungsvertiefungen hindurch nach radial innen verdrängt wird.

Es werden nun bevorzugte Ausführungsformen der Verdichterräder und bevorzugte Ausbildungen der Verdichtungsvorsprünge und der Verdichtungsvertiefungen beschrieben. So erweist es sich als vorteilhaft, wenn die Verdichtungsvertiefungen ausgehend von einem Mantelniveau des Verdichterrads von radial außen nach radial innen einen ersten sich von radial außen nach radial innen, insbesondere konisch, verjüngenden Verdichtungsbereich und einen sich daran nach radial innen anschließenden zweiten Transportbereich mit gleichbleibendem, insbesondere zylindrischem, Öffnungsquerschnitt aufweisen. Der erste Verdichtungsbereich bildet auf diese Weise einen sich von außen nach radial innen verjüngenden Aufnahmebereich, in welchen der mit dieser Verdichtungsvertiefung korrespondierende Vorsprung am anderen Verdichterrad im Zuge des Abrollens der Räder gegeneinander in Eingriff gebracht und außer Eingriff gebracht wird. Der erste Verdichtungsbereich ist also derart gestaltet, dass der korrespondierende Vorsprung vorzugsweise kontaktfrei in Eingriff und wieder außer Eingriff mit dem Verdichtungsbereich gebracht werden kann, wobei das Spiel zwischen dem Vorsprung und der den betreffenden Verdichtungsbereich begrenzende Wandung nicht zu groß und nicht zu klein gewählt wird, so dass ein hinreichender Verdichtungsdruck aufgebaut werden kann. Ein typisches Spiel beträgt hier ca. 0,05 bis 0,3 mm. Beim Verdichten des CO₂-Schnees wird innerhalb eines jeweiligen ersten Verdichtungsbereichs bereits eine Verdichtung zu Eispellets realisiert. Es liegt also innerhalb des jeweiligen zweiten Transportbereichs ein säulenförmiger Trockeneisköper vor, der nach radial innen verdrängt wird.

Weiter erweist es sich als vorteilhaft, wenn der erste Verdichtungsbereich durch eine Wandung mit einem Neigungswinkel zur radialen Richtung von 5 bis 35° begrenzt ist. Nach einer weiteren Ausführungsform ist vorgesehen, dass die Verdichtungsvertiefungen einen sich an den zweiten Transportbereich nach radial innen anschließenden dritten Transportbereich mit gegenüber dem zweiten Transportbereich größerem Öffnungsquerschnitt aufweisen. Hierbei ist es ausreichend, wenn ein Durchmesser des dritten Transportbereichs lediglich geringfügig, insbesondere wenigstens 2%, insbesondere wenigstens 5%, weiter insbesondere wenigstens 10% größer ist als ein Durchmesser im zweiten Transportbereich. Hierdurch kann in vorteilhafter Weise verhindert werden, dass sich der säulenförmige Trockeneiskörper bei der weiteren Umdrehung des Verdichterrads unter dem Druck im Inneren des Verdichterrads wieder nach radial außen bewegt, was verhindert werden soll. Auf diese Weise bildet das Trockeneis eine Abdichtung der nach radial innen mündenden Verdichtungsvertiefungen, ohne dass weitergehende Maßnahmen ergriffen werden müssten. Weiterhin wird hierdurch in vorteilhafter Weise die Reibung zwischen Trockeneiskörper und Transportbereich reduziert.

Im Hinblick auf die Ausbildung der Vorsprünge erweist es sich als vorteilhaft, dass die Vorsprünge ausgehend von einem Mantelniveau des Verdichterrads einen sich nach radial außen erhebenden stößelförmigen Bereich für den Eingriff in eine betreffende Verdichtungsvertiefung aufweisen. Es kann weiter vorgesehen sein, zwischen dem Mantelniveau und dem stößelförmigen Bereich ein sich nach radial außen verjüngender Übergangsbereich ausgebildet ist. Weiter erweist es sich als vorteilhaft, wenn der stößelförmige Bereich eine im Wesentlichen in der radialen Richtung gleichbleibende Außenumfangskontur, insbesondere eine Zylinderform, aufweist.

Der stößelförmige Bereich, welcher eine zu dem CO₂-Schnee gewandte Stempelfläche des so gebildeten Verdichters bildet, kann ein angefastes oder verrundetes freies Ende aufweisen. Es ist bevorzugt, dass die eigentliche Stempelfläche im Wesentlichen orthogonal zur radialen Richtung ausgebildet ist, um einen maximalen nach radial innen gerichteten Verdichtungsdruck beim Abrollen und Eingreifen in die betreffende Verdichtungsvertiefung zu bilden.

Weitere Merkmale, Einzelheiten und Vorteile der Erfindung ergeben sich aus den beigefügten Patentansprüchen und aus der zeichnerischen Darstellung und nachfolgenden Beschreibung der Erfindung. In der Zeichnung zeigt:
Figuren 1a, b eine schematische Darstellung der erfindungsgemäßen Reinigungsvorrichtung;
Figur 2 eine perspektivische Darstellung der gegeneinander abrollenden Verdichterräder der Vorrichtung nach Figur 1;
Figur 3 eine weitere Darstellung der gegeneinander abrollenden Verdichterräder mit teilweise angedeuteten Antriebskomponenten und einem feststehenden Füllkörper im Inneren der Verdichterräder;
Figur 4 eine Schnittansicht durch die Vorrichtung;
Figur 5 eine teilweise Schnittansicht zur Verdeutlichung des Antriebs der Verdichterräder;
Figur 6 eine perspektivische Darstellung der Ausbildung der Verdichterräder mit Vorsprüngen und Verdichtungsvertiefungen und
Figur 7 eine Schnittansicht eines Bereichs von miteinander kämmenden Verdichterrädern.

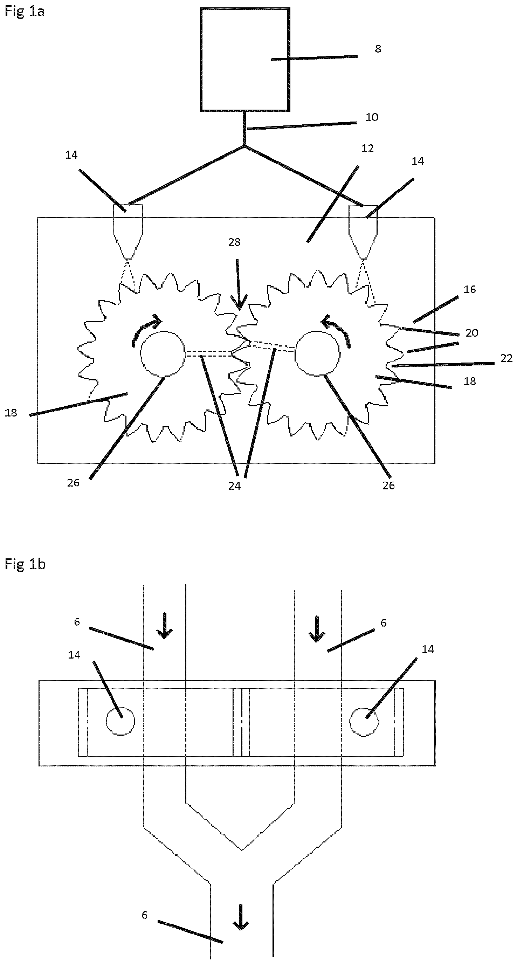

Die Figur 1 zeigt rein schematisch eine Reinigungsvorrichtung 2 für die Impuls beaufschlagende Reinigung von Gegenständen mittels eines Trockeneispellets 4 mitführenden Gasstroms 6. Schematisch angedeutet ist eine Speichereinrichtung 8 für flüssiges CO₂, von der über eine Entnahmeleitung 10 flüssiges CO₂ zu einer Expansionseinrichtung 12 zuführbar ist. Die Expansionseinrichtung 12 umfasst Expansionsdüsen 14, durch welche das zugeführte flüssige CO₂ in an sich bekannter Weise entspannt und in ein CO₂-Gas/CO₂-Schnee Gemisch umgewandelt wird. Die feste Komponente dieses Gemischs, also CO₂-Schnee, wird einer Verdichtungseinrichtung 16 zugeführt, mittels derer CO₂-Schnee zu CO₂-Trockeneis verpresst und zu Trockeneis-Pellets verarbeitet wird.

Die Verdichtungseinrichtung 16 ist im vorliegenden Fall nach Art eines Zahnradverdichters ausgebildet. Sie umfasst beispielhaft zwei miteinander kämmende Verdichterräder 18, bei denen es sich jedoch nicht um Zahnräder im eigentlichen Sinn mit gegeneinander abwälzender Stirnverzahnung handelt, sondern die Verdichterräder 18 haben wie noch im Einzelnen erläutert werden wird nach außen vorstehende stößel-, stift- oder domförmig ausgebildete freistehende Vorsprünge 20, welche in im Wesentlichen komplementär hierzu ausgebildete Verdichtungsvertiefungen 22 bei dem jeweils anderen Verdichterrad 18 in Eingriff und außer Eingriff gebracht werden, wenn die Verdichterräder 18 gegeneinander kämmend abrollen. Die Verdichtungsvertiefungen 22 münden über einen jeweiligen im Wesentlichen radial orientierten Transportkanal 24 nach radial innen in eine axiale Durchgangsöffnung 26 des jeweiligen Verdichterrads 18 aus. Beim Abrollen der Verdichterräder 18 gegeneinander wird in einen Walzenspalt 28 der Verdichterräder 18 gegebener CO₂-Schnee durch Eingreifen der jeweiligen Vorsprünge 20 in die jeweiligen Verdichtungsvertiefungen 22 zu Trockeneis verdichtet und nach radial innen durch den jeweiligen Transportkanal 24 hindurch in die axiale Durchgangsöffnung 26 des jeweiligen Verdichterrads 18 verdrängt. Dort wird das Trockeneis zu Trockeneis-Pellets 4 auf noch zu beschreibende Weise gebrochen.

Weiter steht in oder für die Reinigungsvorrichtung 2 ein Druckgasstrom zur Verfügung, der über einen nicht dargestellten Druckgasanschluss zugeführt wird oder von einer nicht dargestellten Einrichtung zur Erzeugung eines unter Druck stehenden Gasstroms 6 gebildet wird. Erfindungsgemäß wird nun derjenige unter Druck stehende Gasstrom 6, welcher für die Impuls beaufschlagende Abreinigung von Gegenständen mit Trockeneis-Pellets beaufschlagt wird und dann auf den abzureinigenden Gegenstand aufgebracht wird, durch wenigstens einen, im beispielhaft dargestellten Fall durch beide axiale Durchgangsöffnungen 26 der Verdicherräder 18 hindurchgeführt und hierdurch mit Trockeneis-Pellets "befüllt". Die Trockeneis-Pellets 4 können also gewissermaßen in situ im Betrieb der Reinigungsvorrichtung mittels der vorstehend beschriebenen Verdichtungseinrichtung 16 hergestellt und unmittelbar ohne weitergehende Zwischenlagerung dem durch die jeweilige axiale Durchgangsöffnung 26 geführten Gasstrom 6 zugeführt werden. Im beispielhaft und bevorzugt dargestellten Fall sind beide axiale Durchgangsöffnungen 26 stromabwärts zusammengeführt, um einen einzigen Gasstrom 6 zu bilden, welcher dann über ein Strahlrohr und/oder eine Strahldüse, gegebenenfalls unter Zuführung weiteren Druckgases, auf einen abzureinigenden Gegenstand zur Ausführung eines Trockeneis-Pellet-Strahlverfahrens für Reinigungszwecke gerichtet wird.

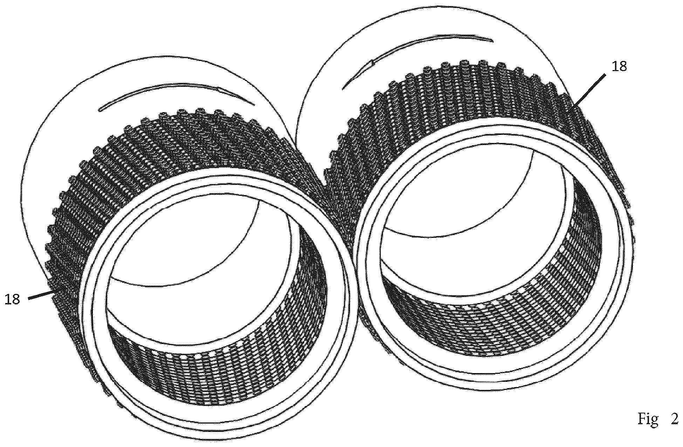

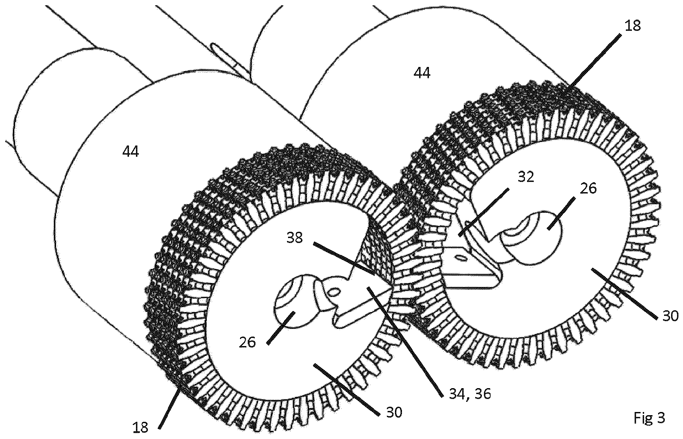

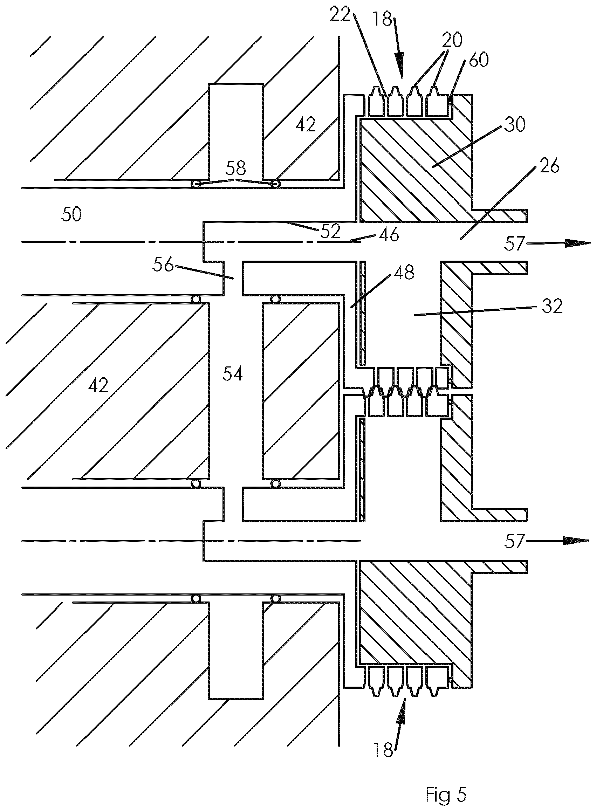

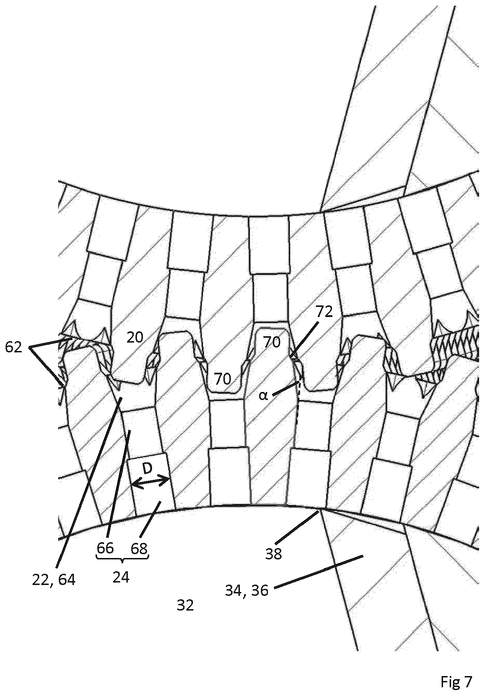

Die Figuren 2 und 3 zeigen miteinander kämmenden Verdichterräder 18, deren Ausbildung mit Vorsprüngen und Verdichtungsvertiefungen noch im Einzelnen beschrieben werden wird. Die in Figur 3 schematisch dargestellten Antriebskomponenten für die Verdichterräder werden im Zusammenhang mit Figur 5 beschrieben werden. Anhand der Figuren 3, 4, 5 ist erkennbar, dass die Verdichterräder im Bereich ihrer Vorsprünge 20 und Verdichtungsvertiefungen 22 hülsenförmig ausgebildet sind und dass innerhalb dieser Hülsenform ein feststehender Füllkörper 30 vorgesehen ist, der verschiedene Aufgaben erfüllt. Zum einen begrenzt er die axiale Durchgangsöffnung 26 der Verdichterräder 18 für den Gasstrom 6. Er dient in gewisser Weise auch als Lager oder Nabe für die Verdichterräder 18, und er umfasst eine Aussparung 32, die sich von radial außen nach radial innen bis zu der axialen Durchgangsöffnung 26 erstreckt. An einer die Aussparung 32 begrenzenden Wandung ist eine Abschereinrichtung 34 mit einer Rakelklinge 36 vorgesehen, welche mit ihrer Rakelschneide 38 gegen die Innenseite der Verdichterräder 18 ausgerichtet ist (s. auch Figur 7) und nach radial innen verdrängtes Trockeneis zu Trockeneispellets vereinzelt.

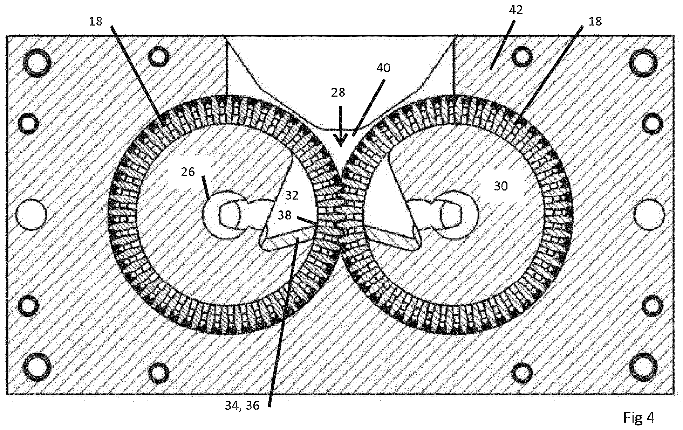

In der Darstellung der Figur 4 erkennt man den Bereich der Vorrichtung, in welchem ein Walzenspalt zwischen den beiden Verdichterrädern 18 angeordnet ist. Schematisch angedeutet ist in Figur 4 der dem Walzenspalt 28 zuführbare CO₂-Schnee 40, wobei in Figur 4 die Expansionseinrichtung 12 und Expansionsdüsen 14 nicht dargestellt sind und insbesondere CO₂-Schnee auch in anderer Weise dem Walzenspalt 28 zugeführt werden kann. Indessen verdeutlicht Figur 4 die Anordnung der Verdichterräder in einem Gehäuse 42 der Verdichtungseinrichtung 16, welches auch die Füllkörper 30 bilden kann.

Figur 5 verdeutlicht die Anordnung und den Antrieb der Verdichterräder 18. Ausgehend von einem hülsenförmigen Bereich 44 der Verdichterräder 18 schließt sich ein orthogonal zu einer Antriebs- und Rotationsachse 46 der Verdichterräder 18 erstreckter Flanschbereich 48 nach radial innen und geht von dort über in einen Wellenabschnitt 50. In dem Wellenabschnitt 50 ist eine in Richtung der Antriebs- und Rotationsachse 46 ersteckte Öffnung 52 ausgebildet, die in dem Wellenabschnitt 50 sacklochförmig endet und mit der axialen Durchgangsöffnung 26, welche von dem Füllkörper 30 begrenzt wird, kommuniziert bzw. sich in diese fortsetzt. Der Wellenabschnitt 50 ist umdrehbar gelagert in dem Gehäuse 42.

Des Weiteren ist in Figur 5 dargestellt ein den Wellenabschnitt 50 in Umfangsrichtung ringförmig umgebender Raum 54, welcher auf nicht dargestellte Weise mit Druckgas beaufschlagbar ist, und zwar mit demjenigen Druckgas, welches den Gasstrom 6 der Reinigungsvorrichtung bildet. Hierfür weist der Wellenabschnitt 50 eine radiale Queröffnung 56 auf, welche in den Raum 54 ausmündet. Auf diese Weise kann unter Druck stehendes Gas durch den Raum 54, die Queröffnung 56 hindurch in die längs verlaufende Öffnung 52 in dem Wellenabschnitt 50 und von dort in die axiale Durchgangsöffnung 26 des betreffenden Verdichterrads 18 und durch dieses hindurch in Richtung eines Pfeils 57 in ein Strahlrohr oder eine Strahldüse der Vorrichtung gelangen.

Zur Abdichtung des Wellenabschnitts 50 ist beidseits des Raums 54 eine Dichtung 58 schematisch angedeutet, bei der es sich um eine im Wesentlichen gasdichte Wellendichtung handelt. - Zwischen dem Füllkörper 30 und beispielhaft einer axialen Stirnseite des hülsenförmigen Bereichs 44 der Verdicherräder 18 ist eine weitere Dichtung 60 angedeutet. Auf diese Weise sind die vorstehend genannten miteinander kommunizierenden Öffnungen gegen die Umgebung abgedichtet.

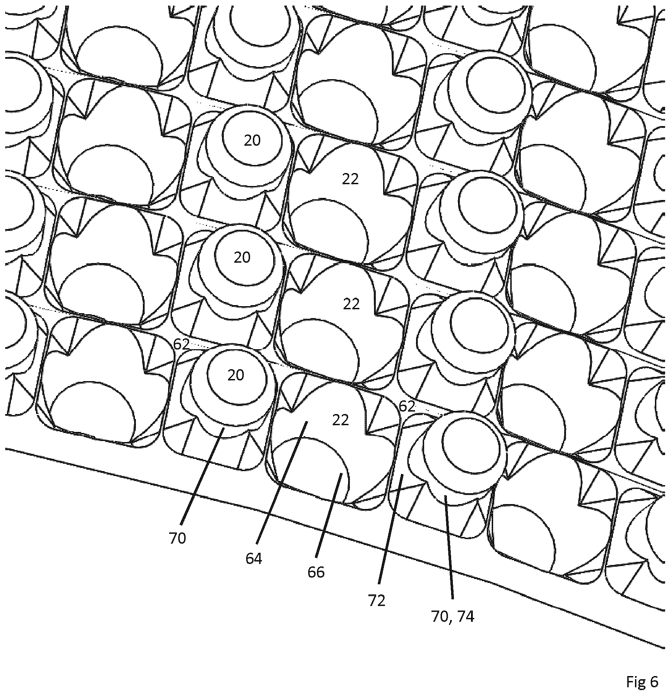

Anhand der Figuren 6 und 7 wird nun die Ausgestaltung der Verdichterräder 18 und der miteinander in Eingriff und außer Eingriff bringbaren Vorsprünge 20 und Verdichtungsvertiefungen 22 erläutert. Beispielhaft ausgehend von einem einheitlichen Mantelniveau 62 eines jeweiligen Verdichterrads 18 erstreckt sich eine jeweilige Verdichtungsvertiefung 22 nach radial innen und mündet über einen schon erwähnten Transportkanal 24 nach radial innen in die axiale Durchgangsöffnung 26 bzw. zunächst in den Innenraum des hülsenförmigen Bereichs 44. Wie schon erwähnt und aus Figuren 3, 4 und 7 ersichtlich, münden die Verdichtungsvertiefungen 22 bei rotierendem Antrieb der Verdichterräder in demjenigen Bereich, in dem die Verdichterräder miteinander kämmen und CO₂-Schnee verdichtet wird, in der Aussparung 32 des Füllkörpers 30, die mit der axialen Durchgangsöffnung 26 kommuniziert.

Jede Verdichtungsvertiefung 22 umfasst von radial außen nach innen einen ersten sich von radial außen nach radial innen verjüngenden, beispielhaft konisch verjüngenden ersten Verdichtungsbereich 64 und einen sich daran nach radial innen anschließenden zweiten Transportbereich 66 mit vorzugsweise gleichbleibendem, beispielhaft zylindrischem Öffnungsquerschnitt. Noch weiter nach radial innen schließt sich an den zweiten Transportbereich ein dritter Transportbereich 68 mit gegenüber dem zweiten Transportbereich 66 größerem Öffnungsqerschnitt D an. Hierdurch wird erreicht, dass in der Verdichtungsvertiefung 22 befindliches Trockeneis nicht wieder in entgegengesetzter Richtung, also nach radial außen, ausgedrückt wird, beispielsweise bedingt durch den Druck des Druckgases 6. Vielmehr bildet das Trockeneis in dem zweiten und dritten Transportbereich 66, 68 selbsttätig eine stabile Abdichtung der verschiedenen Öffnungen. Ein bevorzugter Neigungswinkel α bei dem ersten Verdichtungsbereich 66 ist eingangs beschrieben worden.

Die jeweiligen Vorsprünge 20 umfassen ausgehend von dem Mantelniveau 62 des Verdichterrads 18 einen sich nach radial außen erhebenden stößelförmigen Bereich 70 für den Eingriff in den ersten Verdichtungsbereich 64 der zugeordneten Verdichtungsvertiefung 22. Man erkennt aus Figuren 6 und 7, dass zwischen dem Mantelniveau 62 und dem stößelförmigen Bereich 70 ein sich nach radial außen verjüngender Übergangsbereich 72 ausgebildet ist. Der stößelförmige Bereich 70 umfasst eine im Wesentlichen in der radialen Richtung gleichbleibende Außenumfangskontur und weist beispielhaft und vorzugsweise eine Zylinderform 74 auf. Zum freien Ende des stößelförmigen Bereichs 70 geht die Zylinderform 74 verrundet in eine ebene Stirnseite 76 über, die orthogonal zur radialen Richtung angeordnet ist und eine Stempelfläche 78 bildet.

Beim gegeneinander Abrollen bzw. Kämmen der Verdichterräder 18 greifen die Vorsprünge 18 in die Verdichtungsvertiefungen 22 ein, wobei es zur Verdichtung des CO₂-Schnees innerhalb des ersten Verdichtungsbereichs 64 der Verdichtungsvertiefungen 22 kommt, wodurch Trockeneis gebildet wird. Der verdichtete CO₂-Schnee bzw. Trockeneis wird dann weiter durch den zweiten und dritten Transportbereich 66, 68 nach radial innen gedrückt und dort durch die Rakelschneide 38 der Rakelklinge 36 abgeschert, wodurch Trockeneispellets gebildet werden, die in der Aussparung 32 des Füllkörpers 30 aufgenommen und von dort nach radial innen in die axiale Durchgangsöffnung 26 weitergeleitet werden, wo sie von dem unter Druck und Geschwindigkeit stehenden Gasstrom 6 erfasst und in Richtung auf den abzureinigenden Gegenstand weitertransportiert werden.

## Patentansprüche

1. Trockeneis-Pellet-Strahlverfahren für die Impuls beaufschlagende Abreinigung von Gegenständen mittels eines Trockeneis-Pellets mitführenden Gasstroms (6), wobei Trockeneis-Pellets durch Verdichtung von CO₂-Schnee hergestellt werden und im Anschluss in den Gasstrom (6) eingebracht und beschleunigt werden und der Trockeneis-Pellets mitführende Gasstrom (6) über eine Strahlaustrittsdüse ausgegeben wird und damit der zu reinigende Gegenstand beaufschlagt wird,
wobei die Trockeneis-Pellets in einer Verdichtungseinrichtung (16) durch miteinander kämmende Verdichterräder (18) mit einer axialen Durchgangsöffnung (26) in wenigstens einem Verdichterrad (18) aus CO₂-Schnee gebildet werden, indem nach außen vorstehende Vorsprünge (20) eines Verdichterrads (18) mit hierzu komplementär ausgebildeten im Wesentlichen nach radial innen in die Durchgangsöffnung (26) ausmündenden Verdichtungsvertiefungen (22) in dem anderen Verdichterrad (18) beim Abrollen der Verdichterräder (18) gegeneinander in Eingriff und außer Eingriff gebracht werden, so dass hierdurch in einen Spalt (28) der miteinander kämmenden Verdichterräder (18) eingebrachter CO₂-Schnee zu Trockeneis verdichtet wird und das Trockeneis nach radial innen in die betreffende Durchgangsöffnung (26) hineingedrückt und zu Trockeneis-Pellets gebrochen wird,
**dadurch gekennzeichnet,**
**dass** der Gasstrom (6) durch die axiale Durchgangsöffnung (26) zumindest eines oder vorzugsweise zweier miteinander kämmender Verdichterräder (18) hindurchgeführt wird, und zwar in axialer Richtung in die axiale Durchgangsöffnung (26) eingeleitet und in axialer Richtung durch die axiale Durchgangsöffnung hindurchgeführt wird, so dass die nach radial innen in die betreffende Durchgangsöffnung (26) hineingedrückten Trockeneis-Pellets unmittelbar dem Gasstrom (6) zugeführt und von diesem mitgeführt werden, so dass die Trockeneis-Pellets nur während der Ausführung des Strahlverfahrens hergestellt werden.

2. Strahlverfahren nach Anspruch 1, **dadurch gekennzeichnet, dass** die Trockeneis-Pellets durch zwei miteinander kämmende Verdichterräder (18) mit jeweils einer axialen Durchgangsöffnung (26) aus CO₂-Schnee gebildet werden, und dass jedes Verdichterrad (18) Vorsprünge (20) und Verdichtungsvertiefungen (22) aufweist, die miteinander in Eingriff und außer Eingriff bringbar sind, so dass Trockeneispellets in die Durchgangsöffnung (26) jedes der zwei miteinander kämmenden Verdichterräder (18) hineingedrückt werden, und dass durch beide Durchgangsöffnungen (26) ein Gasstrom (6) geführt wird.

3. Strahlverfahren nach Anspruch 2, **dadurch gekennzeichnet, dass** beide Gasströme (6) stromabwärts zusammengeführt werden, um einen einzigen Gasstrom (6) zu bilden, um den zu reinigenden Gegenstand zu beaufschlagen.

4. Strahlverfahren nach Anspruch 1, 2 oder 3, **dadurch gekennzeichnet, dass** der Gasstrom (6) auf einem Druck von 3- 20 bar, insbesondere 3-15 bar, insbesondere 3-12 bar, insbesondere 3-10 bar, gehalten wird und dass der Gasstrom (6) mit einer Geschwindigkeit von 4-60 m/s betrieben wird.

5. Strahlverfahren nach einem oder mehreren der vorstehenden Ansprüche, **dadurch gekennzeichnet, dass** die Verdichterräder (18) während der Ausführung des Strahlverfahrens kontinuierlich und nicht getaktet angetrieben werden.

6. Reinigungsvorrichtung (2) für die Impuls beaufschlagende Abreinigung von Gegenständen mittels eines Trockeneis-Pellets mitführenden Gasstroms (6) mit einem Anschluss oder einer Speichereinrichtung (8) für flüssiges CO₂,
mit einer Expansionseinrichtung (12) zur Erzeugung von CO₂-Schnee aus flüssigem CO₂,
mit einer Verdichtungseinrichtung (16) mit miteinander kämmenden Verdichterrädern (18) mit einer axialen Durchgangsöffnung (26) in wenigstens einem Verdichterrad (18), wobei bei wenigstens einem Verdichterrad (18) nach außen vorstehende Vorsprünge (20) vorgesehen sind, die mit hierzu komplementär ausgebildeten im Wesentlichen nach radial innen in die Durchgangsöffnung (26) ausmündenden Verdichtungsvertiefungen (22) in dem anderen Verdichterrad (18) beim Abrollen der Verdichterräder (18) gegeneinander in Eingriff und außer Eingriff gebracht werden, so dass hierdurch in einen Spalt (28) der miteinander kämmenden Verdichterräder (18) eingebrachter CO₂-Schnee zu Trockeneis verdichtet wird und das Trockeneis nach radial innen in die betreffende Durchgangsöffnung (26) hineingedrückt und zu Trockeneis-Pellets gebrochen wird,
mit einem Druckgasanschluss oder mit einer Einrichtung zur Erzeugung eines unter Druck stehenden Gasstroms (6), und mit Druckgas-Leitungsmitteln zur Führung des Gasstroms (6), zur Aufnahme von Trockeneis-Pellets und zur Weiterleitung des Trockeneis-Pellets mitführenden Gasstroms (6) bis zu einer Strahldüse, durch welche der Trockeneis-Pellets mitführende Gasstrom im Betrieb der Reinigungsvorrichtung (2) ausgegeben und auf den zu reinigenden Gegenstand gerichtet wird,
**dadurch gekennzeichnet,**
**dass** die Reinigungsvorrichtung (2) für die Impuls beaufschlagende Abreinigung von Gegenständen mittels eines Trockeneis-Pellets mitführenden Gasstroms (6) unter Ausführung eines Strahlverfahrens nach einem oder mehreren der vorstehenden Ansprüche eingerichtet ist, und
**dass** die axiale Durchgangsöffnung (26) in wenigstens einem Verdichterrad (18) Teil der Druckgas-Leitungsmittel ist, das heißt der Gasstrom (6) im Betrieb der Reinigungsvorrichtung (2) durch die axiale Durchgangsöffnung (26) in dem Verdichterrad (18) hindurchgeführt ist und dabei Trockeneis-Pellets dem Gasstrom (6) zuführbar sind, wobei der Gasstrom (6) in axialer Richtung in die axiale Durchgangsöffnung (26) eingeleitet und in axialer Richtung durch die axiale Durchgangsöffnung (26) hindurchgeführt wird.

7. Reinigungsvorrichtung (2) nach Anspruch 6, **dadurch gekennzeichnet, dass** in beiden miteinander kämmenden Verdichterrädern (18) jeweils eine axiale Durchgangsöffnung (26) ausgebildet ist, welche Teil der Druckgas-Leitungsmittel ist, und dass jedes Verdichterrad (18) Vorsprünge (20) und Verdichtungsvertiefungen (22) aufweist, die miteinander in Eingriff und außer Eingriff bringbar sind, so dass Trockeneispellets in die Durchgangsöffnung (26) jedes der zwei miteinander kämmenden Verdichterräder (18) hineingedrückt werden.

8. Reinigungsvorrichtung nach Anspruch 7, **dadurch gekennzeichnet, dass** beide axiale Durchgangsöffnungen (26) und damit beide Gasströme (6) stromabwärts zusammengeführt sind, um einen einzigen Gasstrom (6) zu bilden, um den zu reinigenden Gegenstand zu beaufschlagen.

9. Reinigungsvorrichtung nach einem oder mehreren der Ansprüche 6-8, **dadurch gekennzeichnet, dass** die nach außen vorstehenden Vorsprünge (20) stößel-, stiftförmig oder domförmig ausgebildet sind.

10. Reinigungsvorrichtung nach einem oder mehreren der Ansprüche 6-9, **dadurch gekennzeichnet, dass** nebeneinander angeordnete Verdichtungsvertiefungen (22) voneinander abgegrenzt sind, so dass jede Verdichtungsvertiefung (22) mit einem ihr zugeordneten Vorsprung (20) zur Verdichtung des CO₂-Schnees zusammenwirken kann.

11. Reinigungsvorrichtung nach einem oder mehreren der Ansprüche 6-10, **dadurch gekennzeichnet, dass** die Verdichtungsvertiefungen (22) ausgehend von einem Mantelniveau (62) des Verdichterrads (18) von radial außen nach radial innen einen ersten sich von radial außen nach radial innen, insbesondere konisch, verjüngenden Verdichtungsbereich (64) und einen sich daran nach radial innen anschließenden zweiten Transportbereich (66) mit gleichbleibendem, insbesondere zylindrischem, Öffnungsquerschnitt aufweist.

12. Reinigungsvorrichtung nach Anspruch 11, **dadurch gekennzeichnet, dass** der erste Verdichtungsbereich (64) durch eine Wandung mit einem Neigungswinkel zur radialen Richtung von 5° bis 35° begrenzt ist.

13. Reinigungsvorrichtung nach Anspruch 11 oder 12, **dadurch gekennzeichnet, dass** die Verdichtungsvertiefungen (22) einen sich an den zweiten Transportbereich (66) nach radial innen anschließenden dritten Transportbereich (68) mit gegenüber dem zweiten Transportbereich (66) größerem Öffnungsquerschnitt aufweisen.

14. Reinigungsvorrichtung nach einem oder mehreren der Ansprüche 6-13, **dadurch gekennzeichnet, dass** die Vorsprünge (20) ausgehend von einem Mantelniveau (62) des Verdichterrads (18) einen sich nach radial außen erhebenden stößelförmigen Bereich (70) für den Eingriff in eine betreffende Verdichtungsvertiefung (22) aufweisen.

15. Reinigungsvorrichtung nach Anspruch 14, **dadurch gekennzeichnet, dass** der stößelförmige Bereich (70) eine im Wesentlichen in der radialen Richtung gleichbleibende Außenumfangskontur, insbesondere eine Zylinderform, aufweist und dass der stößelförmige Bereich (70) eine Stempelfläche (78) im Wesentlichen orthogonal zur radialen Richtung aufweist.

## Claims

1. Dry-ice pellet blasting method for the pulsed cleaning of objects by means of a gas stream (6) carrying dry-ice pellets,
with dry-ice pellets being produced by compaction of CO₂ snow and subsequently being introduced into the gas stream (6) and accelerated, and the gas stream (6) carrying the dry-ice pellets being discharged via a blast outlet nozzle, and the object to be cleaned thus being impinged upon,
the dry-ice pellets being formed from CO₂ snow in a compacting device (16) by means of intermeshing compactor wheels (18) having an axial through-opening (26) in at least one compactor wheel (18), by outwardly protruding projections (20) of one compactor wheel (18) being brought into and out of engagement with compaction recesses (22), which are complementary thereto and open substantially radially inward into the through-openings (26), in the other compactor wheel (18) when the compactor wheels (18) roll against one another, so that as a result CO₂ snow introduced into a gap (28) of the intermeshing compactor wheels (18) is compacted to form dry ice and the dry ice is pressed radially inward into the relevant through-opening (26) and is broken to form dry-ice pellets,
**characterized in that**
the gas stream (6) is guided through the axial through-opening (26) of at least one or preferably two intermeshing compactor wheels (18), specifically is introduced into the axial through-opening (26) in the axial direction and is guided through the axial through-opening in the axial direction, so that the dry-ice pellets pressed radially inward into the relevant through-opening (26) are directly fed to the gas stream (6) and carried along thereby, so that the dry-ice pellets are produced only during the execution of the blasting method.

2. Blasting method according to claim 1, **characterized in that** the dry-ice pellets are formed from CO₂ snow by means of two intermeshing compactor wheels (18) each having an axial through-opening (26), and **in that** each compactor wheel (18) has projections (20) and compaction recesses (22) which can be brought into and out of engagement with one another, so that dry-ice pellets are pressed into the through-opening (26) of each of the two intermeshing compactor wheels (18), and a gas stream (6) is guided through the two through-openings (26).

3. Blasting method according to claim 2, **characterized in that** the two gas streams (6) are brought together downstream in order to form a single gas stream (6) in order to impinge on the object to be cleaned.

4. Blasting method according to claim 1, claim 2 or claim 3, **characterized in that** the gas stream (6) is kept at a pressure of 3-20 bar, in particular 3-15 bar, in particular 3-12 bar, in particular 3-10 bar, and **in that** the gas stream (6) is operated at a speed of 4-60 m/s.

5. Blasting method according to one or more of the preceding claims, **characterized in that** the compactor wheels (18) are driven continuously and not in a clocked manner during the execution of the blasting method.

6. Cleaning apparatus (2) for the pulsed cleaning of objects by means of a gas stream (6) carrying dry-ice pellets,
comprising a connection or a storage device (8) for liquid CO₂,
comprising an expansion device (12) for producing CO₂ snow from liquid CO₂,
comprising a compaction device (16) having intermeshing compactor wheels (18) with an axial through-opening (26) in at least one compactor wheel (18), outwardly protruding projections (20) being provided for at least one compactor wheel (18), which projections are brought into and out of engagement with compaction recesses (22), which are complementary thereto and open substantially radially inward into the through-openings (26), in the other compactor wheel (18) when the compactor wheels (18) roll against one another, so that as a result CO₂ snow introduced into a gap (28) of the intermeshing compactor wheels (18) is compacted to form dry ice and the dry ice is pressed radially inward into the relevant through-opening (26) and is broken to form dry-ice pellets,
comprising a compressed-gas connection or comprising a device for generating a compressed gas stream (6), and comprising compressed-gas conduits for guiding the gas stream (6), for receiving dry-ice pellets and for transferring the gas stream (6) carrying the dry-ice pellets up to a blast nozzle through which the gas stream carrying dry-ice pellets is output during operation of the cleaning apparatus (2) and directed onto the object to be cleaned,
**characterized in that**
the cleaning apparatus (2) is designed for the pulsed cleaning of objects by means of a gas stream (6) carrying dry-ice pellets by carrying out a blasting method according to one or more of the preceding claims, and
the axial through-opening (26) in at least one compactor wheel (18) is part of the compressed-gas conduit, i.e. the gas stream (6) is guided through the axial through-opening (26) in the compactor wheel (18) during operation of the cleaning apparatus (2), and dry-ice pellets can thereby be fed to the gas stream (6), the gas stream (6) being introduced into the axial through-opening (26) in the axial direction and guided through the axial through-opening (26) in the axial direction.

7. Cleaning apparatus (2) according to claim 6, **characterized in that** an axial through-opening (26) is formed in both of the intermeshing compactor wheels (18), which axial through-opening is part of the compressed-gas conduit, and **in that** each compactor wheel (18) has projections (20) and compaction recesses (22) which can be brought into and out of engagement with one another, so that dry-ice pellets are pressed into the through-opening (26) of each of the two intermeshing compactor wheels (18).

8. Cleaning apparatus according to claim 7, **characterized in that** the two axial through-openings (26) and thus the two gas streams (6) are brought together downstream to form a single gas stream (6) in order to impinge on the object to be cleaned.

9. Cleaning apparatus according to one or more of claims 6-8, **characterized in that** the outwardly protruding projections (20) are ram-shaped, pin-shaped or domeshaped.

10. Cleaning apparatus according to one or more of claims 6-9, **characterized in that** compaction recesses (22) arranged one next to the other are delimited from one another, so that each compaction recess (22) can interact with a projection (20) associated therewith for compacting the CO₂ snow.

11. Cleaning apparatus according to one or more of claims 6-10, **characterized in that** the compaction recesses (22), starting from an outer level (62) of the compactor wheel (18) from radially outside to radially inside, have a first compaction region (64) which tapers, in particular conically, from radially outside to radially inside and a second transport region (66) which adjoins said compaction region radially inward and has a constant, in particular cylindrical, opening cross section.

12. Cleaning apparatus according to claim 11, **characterized in that** the first compaction region (64) is delimited by a wall with an angle of inclination of 5° to 35° relative to the radial direction.

13. Cleaning apparatus according to claim 11 or claim 12, **characterized in that** the compaction recesses (22) have a third transport region (68) which adjoins the second transport region (66) radially inward and has a larger opening cross section than the second transport region (66) .

14. Cleaning apparatus according to one or more of claims 6-13, **characterized in that** the projections (20), starting from an outer level (62) of the compactor wheel (18), have a ram-shaped region (70) that projects radially outward for engagement into a relevant compaction recess (22).

15. Cleaning apparatus according to claim 14, **characterized in that** the ram-shaped region (70) has an outer peripheral contour that is substantially constant in the radial direction, in particular a cylindrical shape, and **in that** the ram-shaped region (70) has a punch surface (78) that is substantially orthogonal to the radial direction.

## Revendications

1. Procédé de grenaillage de pastilles de glace sèche pour le nettoyage pulsé d'objets au moyen d'un courant de gaz (6) entraînant des pastilles de glace sèche,
dans lequel les pastilles de glace sèche sont fabriquées par compactage de neige de CO₂ et ensuite introduites dans le courant de gaz (6) et accélérées et le courant de gaz (6) entraînant les pastilles de glace sèche est distribué par l'intermédiaire d'une buse de sortie de jet et ainsi l'objet à nettoyer est sollicité,
dans lequel les pastilles de glace sèche sont formées à partir de neige de CO₂ dans un dispositif de compactage (16) par des roues de compactage (18) s'engrenant les unes avec les autres avec une ouverture de passage (26) axiale dans au moins une roue de compactage (18), du fait que des parties saillantes (20) faisant saillie vers l'extérieur d'une roue de compactage (18) sont amenées en prise et hors de prise avec des évidements de compactage (22) dans l'autre roue de compactage (18) réalisés de manière complémentaire à celles-ci, débouchant sensiblement radialement vers l'intérieur dans l'ouverture de passage (26) lors du roulement des roues de compactage (18) les unes contre les autres, de sorte qu'ainsi la neige de CO₂ introduite dans une fente (28) des roues de compactage (18) s'engrenant les unes avec les autres est compactée en glace sèche et la glace sèche est pressée radialement vers l'intérieur dans l'ouverture de passage (26) concernée et brisée en pastilles de glace sèche,
**caractérisé en ce**
**que** le courant de gaz (6) est guidé à travers l'ouverture de passage (26) axiale d'au moins une ou de préférence de deux roues de compactage (18) s'engrenant l'une avec l'autre, et ce introduit dans la direction axiale dans l'ouverture de passage (26) axiale et guidé dans la direction axiale à travers l'ouverture de passage axiale, de sorte que les pastilles de glace sèche pressées radialement vers l'intérieur à l'intérieur de l'ouverture de passage (26) concernée sont amenées directement au courant de gaz (6) et entraînées par celui-ci, de sorte que les pastilles de glace sèche ne sont produites que pendant la mise en oeuvre du procédé de grenaillage.

2. Procédé de grenaillage selon la revendication 1, **caractérisé en ce que** les pastilles de glace sèche sont formées à partir de neige de CO₂ par deux roues de compactage (18) s'engrenant l'une avec l'autre avec respectivement une ouverture de passage (26) axiale, et que chaque roue de compactage (18) présente des parties saillantes (20) et des évidements de compactage (22), qui peuvent être amenés en prise et hors de prise les unes avec les autres, de sorte que les pastilles de glace sèche sont pressées à l'intérieur de l'ouverture de passage (26) de chacune des deux roues de compactage (18) s'engrenant l'une avec l'autre, et qu'un courant de gaz (6) est guidé à travers les deux ouvertures de passage (26).

3. Procédé de grenaillage selon la revendication 2, **caractérisé en ce que** les deux courants de gaz (6) sont réunis en aval, afin de former un seul courant de gaz (6), afin de solliciter l'objet à nettoyer.

4. Procédé de grenaillage selon la revendication 1, 2 ou 3, **caractérisé en ce que** le courant de gaz (6) est maintenu à une pression de 3-20 bar, en particulier 3-15 bar, en particulier 3-12 bar, en particulier 3-10 bar, et que le courant de gaz (6) fonctionne à une vitesse de 4-60 m/s.

5. Procédé de grenaillage selon l'une ou plusieurs des revendications précédentes, **caractérisé en ce que** les roues de compactage (18) sont entraînées de manière continue et non cadencée pendant la mise en oeuvre du procédé de grenaillage.

6. Dispositif de nettoyage (2) pour le nettoyage pulsé d'objets au moyen d'un courant de gaz (6) entraînant des pastilles de glace sèche
avec un raccord ou un système de stockage (8) pour du CO₂ liquide,
avec un système d'expansion (12) pour la production de neige de CO₂ à partir de CO₂ liquide,
avec un système de compactage (16) avec des roues de compactage (18) s'engrenant les unes avec les autres avec une ouverture de passage (26) axiale dans au moins une roue de compactage (18), dans lequel pour au moins une roue de compactage (18) des parties saillantes (20) faisant saillie vers l'extérieur sont prévues, qui sont amenées en prise et hors de prise avec des évidements de compactage (22) dans l'autre roue de compactage (18) réalisés de manière complémentaire à celles-ci, débouchant sensiblement radialement vers l'intérieur dans l'ouverture de passage (26) lors du roulement des roues de compactage (18) les unes contre les autres, de sorte qu'ainsi la neige de CO₂ introduite dans une fente (28) des roues de compactage (18) s'engrenant les unes avec les autres est compactée en glace sèche et la glace sèche est pressée radialement vers l'intérieur dans l'ouverture de passage (26) concernée et brisée en pastilles de glace sèche,
avec un raccord de gaz comprimé ou avec un système pour la production d'un courant de gaz (6) sous pression, et avec des moyens d'acheminement de gaz comprimé pour le guidage du courant de gaz (6), pour la réception de pastilles de glace sèche et pour le transfert du courant de gaz (6) entraînant les pastilles de glace sèche jusqu'à une buse d'éjection, par laquelle le courant de gaz entraînant les pastilles de glace sèche lors du fonctionnement du dispositif de nettoyage (2) est émis et dirigé sur l'objet à nettoyer,
**caractérisé en ce**
**que** le dispositif de nettoyage (2) est conçu pour le nettoyage pulsé d'objets au moyen d'un courant de gaz (6) entraînant les pastilles de glace sèche avec mise en oeuvre d'un procédé de grenaillage selon l'une ou plusieurs des revendications précédentes, et
**que** l'ouverture de passage (26) axiale dans au moins une roue de compactage (18) fait partie des moyens d'acheminement de gaz comprimé, ce qui signifie que le courant de gaz (6) lors du fonctionnement du dispositif de nettoyage (2) est guidé à travers l'ouverture de passage (26) axiale dans la roue de compactage (18) et ce faisant les pastilles de glace sèche peuvent être amenées au courant de gaz (6), dans lequel le courant de gaz (6) est introduit dans la direction axiale dans l'ouverture de passage (26) axiale et guidé dans la direction axiale à travers l'ouverture de passage (26) axiale.

7. Dispositif de nettoyage (2) selon la revendication 6, **caractérisé en ce que** respectivement une ouverture de passage (26) axiale est réalisée dans les deux roues de compactage (18) s'engrenant l'une avec l'autre, laquelle fait partie des moyens d'acheminement de gaz comprimé, et que chaque roue de compactage (18) présente des parties saillantes (20) et des évidements de compactage (22), qui peuvent être amenés en prise et hors de prise les uns avec les autres, de sorte que les pastilles de glace sèche sont pressées à l'intérieur de l'ouverture de passage (26) de chacune des deux roues de compactage (18) s'engrenant l'une avec l'autre.

8. Dispositif de nettoyage selon la revendication 7, **caractérisé en ce que** les deux ouvertures de passage (26) axiales et ainsi les deux courants de gaz (6) sont réunis en aval, afin de former un seul courant de gaz (6), afin de solliciter l'objet à nettoyer.

9. Dispositif de nettoyage selon l'une ou plusieurs des revendications 6-8, **caractérisé en ce que** les parties saillantes (20) faisant saillie vers l'extérieur sont réalisées en forme de poussoir, de tige ou en forme de dôme.

10. Dispositif de nettoyage selon l'une ou plusieurs des revendications 6-9, **caractérisé en ce que** les évidements de compactage (22) disposés les uns à côté des autres sont délimités les uns par les autres, de sorte que chaque évidement de compactage (22) peut coopérer avec une partie saillante (20) associée à celui-ci pour le compactage de la neige de CO₂.

11. Dispositif de nettoyage selon l'une ou plusieurs des revendications 6-10, **caractérisé en ce que** les évidements de compactage (22) présentent à partir d'un niveau d'enveloppe (62) de la roue de compactage (18) de radialement vers l'extérieur vers radialement vers l'intérieur une première zone de compactage (64) s'amincissant de radialement vers l'extérieur vers radialement vers l'intérieur, en particulier de manière conique, et une deuxième zone de transport (66) se raccordant à celle-ci radialement vers l'intérieur avec une section transversale d'ouverture constante, en particulier cylindrique.

12. Dispositif de nettoyage selon la revendication 11, **caractérisé en ce que** la première zone de compactage (64) est délimitée par une paroi avec un angle d'inclinaison par rapport à la direction radiale de 5° à 35°.

13. Dispositif de nettoyage selon la revendication 11 ou 12, **caractérisé en ce que** les évidements de compactage (22) présentent une troisième zone de transport (68) se raccordant à la deuxième zone de transport (66) radialement vers l'intérieur avec une section transversale d'ouverture plus grande par rapport à la deuxième zone de transport (66).

14. Dispositif de nettoyage selon l'une ou plusieurs des revendications 6-13, **caractérisé en ce que** les parties saillantes (20) présentent à partir d'un niveau d'enveloppe (62) de la roue de compactage (18) une zone en forme de poussoir (70) se soulevant radialement vers l'extérieur pour l'insertion dans un évidement de compactage (22) concerné.

15. Dispositif de nettoyage selon la revendication 14, **caractérisé en ce que** la zone en forme de poussoir (70) présente un contour périphérique extérieur sensiblement constant dans la direction radiale, en particulier une forme cylindrique, et que la zone en forme de poussoir (70) présente une surface de poinçon (78) sensiblement perpendiculaire à la direction radiale.
